# EUROPÄISCHE PATENTSCHRIFT

(11) **EP 1 098 157 B1**
(45) Veröffentlichungstag und Bekanntmachung des Hinweises auf die Patenterteilung: **16.07.2003**
(21) Anmeldenummer: 00116486.2
(22) Anmeldetag: 29.07.2000
(51) Int. Cl.: F28D 20/02

(54) **Latentwärmespeicher**
Latent heat storage
Stockage de chaleur à chaleur latente

(30) Priorität: 04.11.1999 DE 19953113
(43) Veröffentlichungstag der Anmeldung: 09.05.2001
(73) Patentinhaber: Schneider, Alfred, 77933 Lahr (DE)
(72) Erfinder: Schneider, Alfred, 77933 Lahr (DE)
(74) Vertreter: Patent- und Rechtsanwaltssozietät, Maucher, Börjes & Kollegen

(56) Entgegenhaltungen:
- EP-A- 0 086 559
- WO-A-98/40684
- FR-A- 2 370 236
- US-A- 3 197 975
- PATENT ABSTRACTS OF JAPAN vol. 1995, no. 06, 31. Juli 1995 (1995-07-31) -& JP 07 077396 A (TOKAI RUBBER IND LTD), 20. März 1995 (1995-03-20)
- PATENT ABSTRACTS OF JAPAN vol. 012, no. 466 (M-772), 7. Dezember 1988 (1988-12-07) -& JP 63 189788 A (TOSHIBA CORP), 5. August 1988 (1988-08-05)

## Beschreibung

Die Erfindung betrifft einen Latentwärmespeicher mit einem Speicherbehälter, der mit einem Latentspeichermedium, insbesondere einem Salzhydrat, befüllt ist, wobei in dem Latentwärmespeichermedium zum Erwärmen oder Abkühlen eines Sekundärmediums ein Wärmetauscher angeordnet ist, der mehrere übereinander angeordnete und durch Zwischenräume voneinander beabstandete Wärmeleitwände aufweist, die mit dem Sekundärmedium in thermischem Kontakt stehen.

Ein derartiger Latentwärmespeicher ist aus FR-A-2370236 und aus der Zeitschrift Ki Klima-Kälte-Heizung 12/1979, Seite 88 bis 863 bekannt. Er weist einen mit dem Salzhydrat Glaubersalz befüllten Speicherbehälter auf. In dem Salzhydrat ist ein Wärmetauscher angeordnet, der eine Vielzahl von parallel zueinander verlaufenden, von einem Sekundärmedium durchströmte Rohre aufweist, die jeweils einen Plattenstapel mit mehreren parallel zueinander angeordneten, als Wärmeleitplatten ausgebildete Wärmeleitwände durchsetzen. Dabei sind die Wärmeleitwände thermisch gut leitend mit den Rohren verbunden. Zwischen benachbart zueinander angeordneten Wärmeleitwänden sind Zwischenräume vorgesehen, die mit dem Salzhydrat gefüllt sind. Der vorbekannte Latentwärmespeicher hat sich zwar in der Praxis in einer Vielzahl von Anwendungen bewährt, weist aber dennoch Nachteile auf.

So kann das Salzhydrat beim Entnehmen von Wärmeenergie aus dem Latentwärmespeicher bis unter die eigentliche Kristallisationstemperatur des Salzes abkühlen. Die Gefahr einer derartigen Unterkühlung des Latentspeichermediums ist insbesondere bei stationären statischen Latentwärmespeichern gegeben, wenn das Latentspeichermedium in Ruhe gelassen und nicht durchmischt oder erschüttert wird. Das unterkühlte Salzhydrat kann dann durch eine Erschütterung und/oder Mischen plötzlich kristallisieren, wobei die Temperatur von der Unterkühlungstemperatur auf die normale Kristallisationstemperatur des Salzhydrats ansteigt. Bei einer Unterkühlung des Latentspeichermediums treten dadurch unerwünschte Temperaturschwankungen in dem Latentspeichermedium und somit auch in dem damit thermisch gekoppelten Sekundärmedium auf.

Das Glaubersalz zerfällt beim Schmelzen in einen Feststoffanteil, das sogenannte Anhydrid, und eine Lösung, deren Konzentration von der jeweiligen Temperatur abhängig ist. Die Ursache für dieses Verhalten liegt darin begründet, daß das Kristallwasser nicht in der Lage ist, das gesamte Salz beim Schmelzprozess zu lösen. Dieses Verhalten kann unter Verzicht auf Speicherkapazität teilweise behoben werden, indem zusätzliches Wasser hinzugeführt wird, jedoch resultiert dabei der Verlust der Temperaturkonstanz in dem Maße, wie Überschußwasser vorhanden ist, da dann kein chemisch einheitlicher Stoff mehr vorliegt. Allerdings braucht dieser Lösungsprozeß auch bei Anwesenheit von Überschußwasser etwas Zeit, so daß ein Teil des beim Schmelzprozeß auch bei einem so modifizierten Latentspeichermedium zunächst ausfallenden Anhydrid sich am Boden ansammelt und in einem statischen Latentwärmespeicher, in welchem keine Durchmischung erfolgt, trotz Überschußwassers nur schwer oder gar nicht gelöst wird. Es kann also zu Dichteschwankungen in dem Latentspeichermedium kommen, wodurch die thermische Kapazität des Latentspeichers und dessen Wirkungsgrad herabgesetzt werden.

Ungünstig ist außerdem, daß sich beim Befüllen des vorbekannten Latentwärmespeichers Luftblasen zwischen den Wärmeleitwänden bilden können, so daß ein Teil des Speicherbehälters ungenutzt bleibt und nicht mit dem Latentspeichermedium befüllt werden kann. Die Luftblasen haben außerdem den Nachteil, daß sie das Latentspeichermedium bereichsweise gegen die Wärmeleitwände isolieren, so daß nur eine unvollständige thermische Kopplung zwischen dem Wärmetauscher und dem Latentspeichermedium erreicht wird.

Es besteht deshalb die Aufgabe, einen Latentwärmespeicher der eingangs erwähnten Art zu schaffen, der eine gute thermische Kopplung zwischen dem Latentspeichermedium und dem Sekundärmedium ermöglicht und bei dem eine Unterkühlung des Latentspeichermediums weitestgehend vermieden wird.

Die Lösung dieser Aufgabe besteht darin, daß an der mit dem Latentspeichermedium in Kontakt befindlichen Außenseite des Wärmetauschers und/oder an der mit dem Latentspeichermedium in Kontakt befindlichen Innenseite des Speicherbehälters scharfe Kanten und/oder Spitzen vorgesehen sind und daß die scharfen Kanten und/oder Spitzen beim Abkühlen des Latentspeichermediums Ausgangspunkte für die Bildung von Kristallen in dem Latentspeichermedium bilden.

In vorteilhafter Weise wird durch diese Merkmale und Maßnahmen ein Abkühlen des Latentspeichermediums bis unter die normale Kristallisationstemperatur und somit eine Unterkühlung des Latentwärmespeichers vermieden. Die Kanten und/oder Spitzen können beispielsweise an Vorsprüngen, Stufen und/oder Absätzen der Wärmeleitwände und/oder der Innenwandung des Speicherbehälters angeordnet sein und insbesondere gleichmäßig über die Erstreckungsebene der Wärmeleitwand (Wärmeleitwände) verteilt sein. Der Latentspeicher ermöglicht ein gleichmäßiges Kristallwachstum, wodurch eine gute thermische Kopplung zwischen dem Latentspeichermedium und dem Wärmetauscher bzw. dem Sekundärmedium erreicht werden kann. Auch werden lokale Temperaturschwankungen in dem Latentspeichermedium weitestgehend vermieden, wodurch ein hoher Wirkungsgrad des Latentwärmespeichers erreicht wird.

Bei einer besonders vorteilhaften Ausführungsform der Erfindung sind die Wärmeleitwände mit Lochungen versehen und die Kanten und/oder Spitzen sind an dem die Lochungen umgrenzenden Randbereich der Wärmeleitwände angeordnet. Die Lochungen ermöglichen dann zusätzlich noch eine interne Zirkulation des Latentspeichermediums, wodurch lokale Dichteunterschiede des Latentspeichermediums ausgeglichen werden können. Vorteilhaft ist außerdem, daß sich die Kristalle beim Abkühlen des Latentspeichermediums an den Lochungen jeweils beidseits der die Lochung aufweisenden Wärmeleitwand ausbilden können, wodurch ein noch gleichmäßigeres Kristallwachstum erreicht wird. Die Lochungen ermöglichen beim Laden und Entladen des Latentwärmespeichers außerdem eine Volumensänderung des Latentspeichermediums. Bei einem Wärmetauscher, der mehrere übereinander vorzugsweise in Horizontalebenen angeordnete und durch Zwischenräume voneinander beabstandete Wärmeleitwände aufweist, haben die Lochungen außerdem den Vorteil, daß beim Befüllen des Speicherbehälters mit dem Latentspeichermedium eventuell zwischen den Wärmeleitwänden vorhandene Luftblasen durch die Lochungen hindurch zur Oberfläche des Latentspeichermedium gelangen können. Auch dadurch wird ein guter Wirkungsgrad des Latentwärmespeichers erreicht.

Besonders vorteilhaft ist, wenn die Wärmeleitwände durch Zungen gebildete Vorsprünge aufweisen, die mit ihrer Erstreckungsrichtung vorzugsweise quer zur Ebene der Wärmeleitwand angeordnet sind, und wenn die Kanten und/oder Spitzen an den Zungen angeordnet sind. Die Zungen können dann in die Zwischenräume zwischen den Wärmeleitwänden ragen, wodurch die Gefahr der Unterkühlung des Latentspeichermediums auch an den von den Wärmeleitwänden beabstandeten Stellen reduziert wird.

Besonders vorteilhaft ist, wenn die Zunge einstückig mit der ihr zugeordneten Wärmeleitwand verbunden und insbesondere durch einen aus dem Querschnitt einer Lochung teilausgestanzten Wandungsbereich der Wärmeleitwand gebildet ist. Dadurch können die einzelnen Wandungsbereich der Wärmeleitwand jeweils mit nur einem Stanzvorgang gleichzeitig mit Lochungen und Zungen versehen werden, wobei an den Lochungen und/oder den Zungen jeweils ein Stanzgrad gebildet sein kann, der beim Abkühlen des Latentspeichermediums als Ausgangspunkt für die Kristallisationsbildung dienen kann. Die teilausgestanzten Wandungsbereiche der Wärmeleitwände können während und gegebenenfalls auch nach dem Ausstanzen mit ihren freien Enden aus der Ebene der Wärmeleitwand durch Biegeverformen verschwenkt werden. Die flachseitige Oberfläche der Zungen kann dann etwa der Querschnittsfläche der ihnen jeweils zugeordneten Lochung entsprechen, so daß beim Austanzen der Zungen kein Stanzabfall anfällt.

Bei einer bevorzugten Ausführungsform der Erfindung bilden die Zungen einer ersten Wärmeleitwand einen Abstandshalter für eine dazu benachbarte zweite Wärmeleitwand, wozu der Abstand dieser Wärmeleitwände so bemessen ist, daß die Zungen der ersten Wärmeleitwand mit ihren aus der Ebene dieser Wärmeleitwand vorstehenden freien Endbereichen an der zweiten Wärmeleitwand anliegen. Zueinander benachbart mit ihren Flachseiten einander zugewandte Wärmeleitwände sind dann bei der Herstellung des Wärmetauschers auf einfache Weise jeweils mit den durch die Zungen vorgegebenen Abständen zueinander positionierbar. So können beispielsweise bei einem Wärmetauscher, der mehrere zu einem Plattenstapel angeordnete, durch Zwischenräume voneinander beabstandete, die Wärmeleitwände bildende Wärmeleitplatten aufweist, die Wärmeleitwände bei der Herstellung des Wärmetauschers einfach aufeinander gelegt werden.

Vorteilhaft ist, wenn die Lochungen und/oder die Zungen eine eckige Form aufweisen und insbesondere rechteckförmig, trapezförmig oder dreieckig ausgebildet sind. Das Latentspeichermedium kann dann an den Ecken der Zungen und/oder Lochungen beim Abkühlen besonders gut kristallisieren.

Bei einer Ausführungsform der Erfindung ist vorgesehen, daß der Wärmetauscher ein Rohrwärmetauscher mit einem das Sekundärmedium führenden, mit den Wärmeleitwänden thermisch leitend verbundenen Rohrleitungssystem ist. Dabei kann das Rohrleitungssystem mehrere, die Wärmeleitwände jeweils quer zu ihren Erstreckungsebenen durchsetzende Rohre aufweisen und/oder die Rohre können parallel zu den Wärmeleitwänden verlaufen und auf diesen angeordnet sein. Die Rohre sind vorzugsweise parallel zueinander angeordnet und verlaufen etwa in vertikaler Richtung, so daß das jeweils durch die einzelenen Rohre strömende Sekundärmedium sowohl mit den wärmeren oberen Schichten des Latentspeichermediums, als auch mit den kälteren unteren Schichten in thermischen Kontakt gerät. Die Wärmeleitwände sind thermisch gut leitend mit den Rohren verbunden, wodurch eine gute Wärmeleitfähigkeit zwischen dem durch die Rohre hindurchgeführten Sekundärmedium und dem Latentspeichermedium erreicht wird.

Die Wärmeleitwände können durch die voneinander beabstandeten Wärmeleitplatten eines von den Rohren durchsetzten Plattenstapels gebildet sein. Die Wärmeleitwände können aber auch durch die Wicklungen oder die sich überlappenden Wandungsbereiche einer in einer rechtwinklig zu ihrer Erstreckungsebene verlaufenden Ebene spiral- oder wickelförmig veraufenden Wärmeleitplatte gebildet sein, wobei zueinander benachbarte Wicklungen oder Wandungsbereiche jeweils durch einen Zwischenraum voneinander beabstandetet sind. Bei dieser Ausführungsfom verlaufen die Rohre vorzugweise auf der Wärmeleitplatte. Es sind aber auch andere Ausführungsfomen denkbar, bei denen die Rohre die Wicklungen oder die Wandungsbereiche der Wärmeleitplatte durchsetzen. Gegebenenfalls ist es sogar möglich, daß der Wärmetauscher mehrere spiral- oder wickelförmig veraufende Wärmeleitplatten aufweist, die ineinander verschachtelt sind oder derart ineinander greifen, daß eine erste Wärmeleitplatte zumindest bereichsweise in den zwischen den Wandungen einer zweiten Wärmeleitplatte gebildeten Zwischenräumen angeordnet ist. Die Rohre oder Rohrleitungssysteme dieser Wärmetauscher können dann parallel zueinander geschaltet sein, wodurch sich in dem Wärmetauscher ein geringer Strömungswiderstand für das Sekundärmedium ergibt. Der Wärmetauscher kann auch mehrere ineinander verschachtelte und vorzugsweise in etwa konzentrisch zueinander angeordneten Zylindermantelflächen verlaufende Wärmeleitplatten aufweisen. Dabei sind die Zylindermantelflächen vorzugsweise Kreiszylindermantelflächen.

Zweckmäßigerweise ist vorgesehen, daß das Rohrleitungssystem mehrere mit den Wärmeleitwänden jeweils thermisch leitend verbundene Rohre aufweist, die zum richtungsgleichen Durchströmen mit dem Sekundärmedium an ihren oberen Enden mit einem ersten Verteiler und an ihren unteren Enden mit einem zweiten Verteiler für das Sekundärmedium verbunden sind und daß die Verteiler jeweils an einem Zu- und/oder Ableitungsanschluß für das Sekundärmedium angeschlossen sind. Die Strömungsrichtung des Sekundärmediums kann dann in den einzelnen Rohren beim Erwärmen des Latentspeichermediums (Aufladen des Latentwärmespeichers) von oben nach unten und beim Abkühlen des Latentspeichermediums (Entladen des Latentwärmespeichers) von unten nach oben erfolgen. Dadurch wird über die gesamte Länge der Rohre jeweils eine gute Wärmeübertragung zwischen dem Sekundärmedium und dem Latentspeichermedium erreicht. Gegebenenfalls können die Verteiler als Rohrverteiler nach dem System Tichelmann ausgebildet sein, wobei bei den einzelnen Rohren des Wärmetauschers die Summe aus der Länge des dem betreffenden Rohr jeweils vorgeschalteten Vorlaufrohrs des einen Verteilers und der Länge des dem Rohr nachgeschalteten Nachlaufrohres des anderen Verteilers jeweils etwa gleich groß ist.

Besonders vorteilhaft ist, wenn in die Innenhöhlungen der Rohre Verdrängungskörper eingesetzt sind und wenn jeweils zwischen dem Verdrängungskörper und dem Rohr wenigstens ein Zwischenraum für den Durchtritt des Sekundärmediums vorgesehen ist. Im Bereich des Verdrängungskörpers ergibt sich dann eine Reduzierung des freien Querschnitt des Rohres, wodurch sich die Strömungsgeschwindigkeit in dem Sekundärmedium im Vergleich zu einem entsprechenden Rohr, das den Verdrängungskörper nicht aufweist, erhöht. Die größere Strömungsgeschwindigkeit ermöglicht eine bessere thermische Kopplung zwischen dem Sekundärmedium und dem Latentspeichermedium.

Bei einer zweckmäßigen Ausgestaltung der Erfindung weist der in das Rohr eingesetzte Verdrängungskörper eine Innenhöhlung mit einem Durchtrittskanal für das Sekundärmedium auf, wobei das Rohr thermisch leitend mit dem Verdrängungskörper verbunden ist. An der Innenseite des Verdrängungskörpers ergibt sich dann eine zusätzliche, mit dem Sekundärmedium in Kontakt stehende wärmeleitende Oberfläche, was einen noch kleineren Wärmewiderstand zwischen dem Sekundärmedium und dem Latentspeichermedium ermöglicht. Ein besonders guter thermischer Kontakt zwischen dem Rohr und dem darin eingesetzten Verdrängungskörper kann dadurch erreicht werden, daß der Verdrängungskörper beim Einsetzen in das Rohr eine tiefere Temperatur als das Rohr aufweist, wobei die Querschnittsabmessungen des Verdrängungskörpers so an die Innenabmessungen des Rohres angepaßt sind, daß dieser bei der tieferen Temperatur gerade noch in das Rohr einsetzbar ist. Der Verdrängungskörper kann dazu vor dem Einsetzen in das Rohr abgekühlt und/oder das Rohr erwärmt werden.

Zweckmäßigerweise bilden mehrere der erfindungsgemäßen Latentwärmespeicher eine Speicherbatterie, wozu die Sekundärmedium-Zu- und -Ableitungen der Wärmetauscher dieser Latentwärmespeicher durch Verbindungsleitungen miteinander verbunden sind. Insgesamt ergibt sich dadurch eine aus mehreren Modulen bestehende Speicherbatterie, wobei die einzelnen Module in ihren Abmessungen so bemessen sein können, daß sie auf einfache Weise zum Installationsort transportiert werden können. Dort kann dann eine der jeweils gewünschten Speicherkapazität entsprechende Anzahl Module zu einer Speicherbatterie miteinander verbunden werden. Selbstverständlich kann der Latentwärmespeicher oder eine mehrere Latentwärmespeicher aufweisende Speicherbatterie für einen Transport von Wärmeenergie über größere Distanzen auch auf einem Fahrzeug als mobile Wärmequelle angeordnet sein.

Nachfolgend ist ein Ausführungsbeispiel der Erfindung anhand der Zeichnung näher erläutert. Es zeigen:
- Fig. 1: eine Seitenansicht eines Latentwärmespeichers mit in Horizontalebenen angeordneten Wärmeleitplatten, wobei der Latentwärmespeicher nur über einen Teil seiner Länge dargestellt ist und wobei die Behälterwand des Speicherbehälters bereichsweise unterbrochen dargestellt ist, um die Sicht auf den dahinter befindlichen Wärmetauscher freizugeben,
- Fig. 2: eine Aufsicht auf den in Fig. 1 gezeigten Latentwärmespeicher,
- Fig. 3: eine Ansicht ähnlich Fig. 2, wobei jedoch das Deckelteil von dem Speicherbehälter abgenommen ist,
- Fig. 4: eine Seitenansicht des Wärmetauschers des Latentwärmespeichers nach Fig. 1, wobei der Wärmetauscher unterbrochen dargestellt ist,
- Fig. 5: eine vergrößerte Seitenansicht eines Teilbereichs eines Rohrwärmetauschers, dessen Rohre mehrere Wärmeleitwände durchsetzen, die quer zu ihren Erstreckungsebenen durch Zwischenräume voneinader beabstandet sind,
- Fig. 6: einen Teilquerschnitt durch ein Rohr des Wärmetauschers an der in Fig. 5 mit VI bezeichneten Stelle,
- Fig. 7: eine Aufsicht auf einen Teilbereich einer Wärmeleitwand des Wärmetauschers,
- Fig. 8: einen vergrößerten Teilquerschnitt durch das obere Ende des in Fig. 1 gezeigten Speicherbehälters,
- Fig. 9: einen Querschnitt durch eines der Rohre des Wärmetauschers, wobei in dem Rohr ein Verdrängungskörper angeordnet ist,

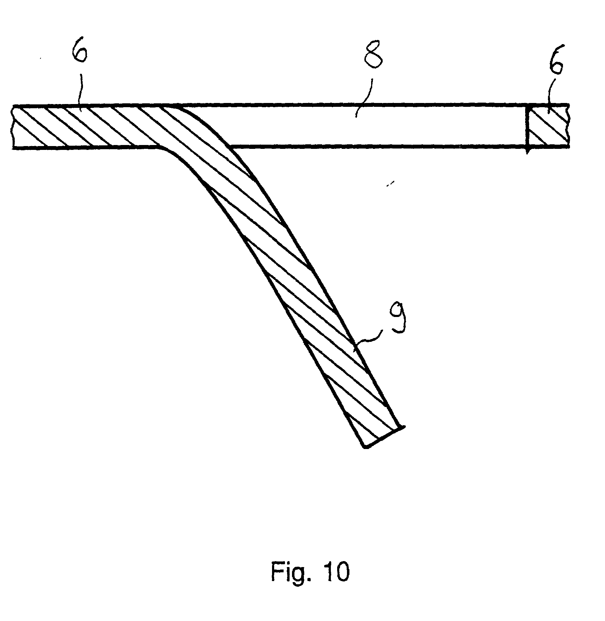

- Fig. 10: einen Querschnitt durch einen eine Zunge mit einer benachbart dazu angeordneten Lochung aufweisenden Teilbereich einer Wärmeleitwand,
- Fig. 11: eine Seitenansicht eines Latentwärmespeichers mit in Vertikalebenen angeordneten Wärmeleitwänden,
- Fig. 12: eine Ansicht des in Fig. 11 gezeigten Latentwärmespeichers aus der mit XII bezeichneten Richtung,
- Fig. 13: eine Aufsicht auf den Latentwärmespeicher gemäß Fig. 11,
- Fig. 14: einen Teilquerschnitt durch eine eine Lochung aufweisende Wärmeleitwand,
- Fig. 15 und 16: einen Horizontalquerschnitt durch einen Latentwärmespeicher mit einer spiral- oder wickelförmig ausgebildeten Wärmeleitplatte und
- Fig. 17: einen Teilquerschnitt durch die Wärmeleitwand und die darauf angeordneten Rohre eines Wärmetauschers.

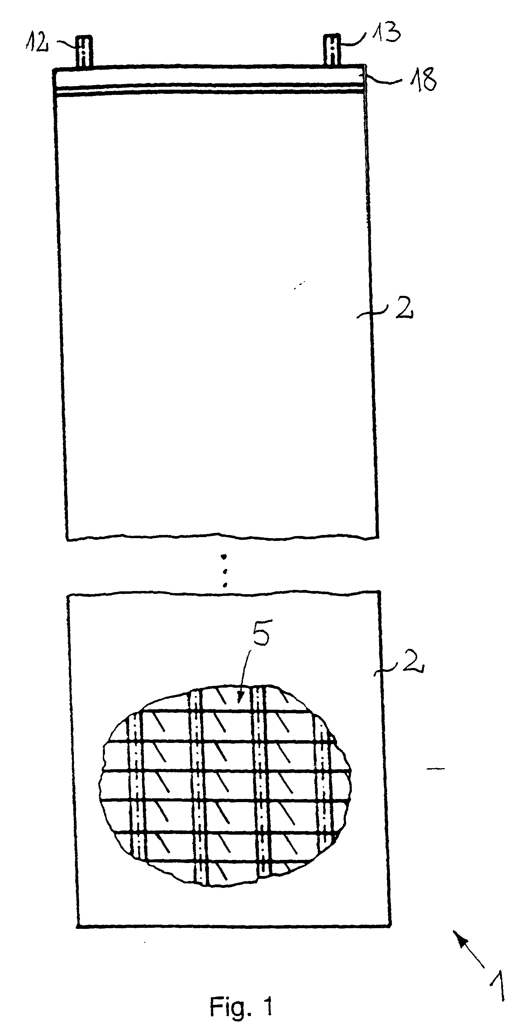

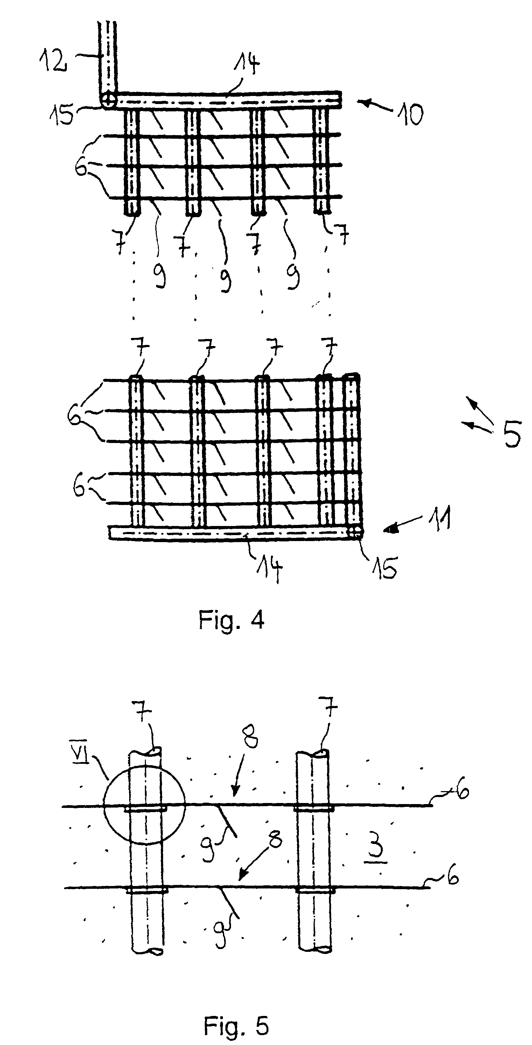

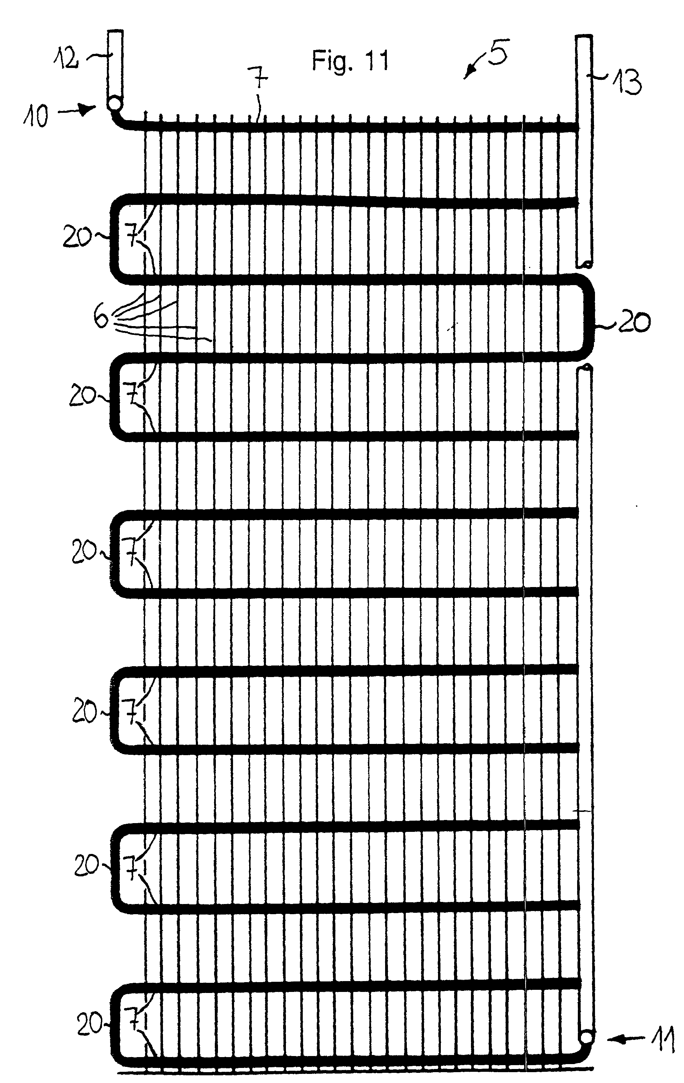

Ein im ganzen mit 1 bezeichneter Latentwärmespeicher weist einen Speicherbehälter 2 auf, der mit einem ein Salzhydrat enthaltenden Latentspeichermedium 3 befüllt ist. In dem Latentspeichermedium 3 ist zum Erwärmen oder Abkühlen eines Sekundärmediums 4 ein Wärmetauscher 5 angeordnet, der einen Plattenstapel mit mehreren durch Zwischenräume voneinander beabstandete Wärmeleitwände 6 aufweist. Bei den Ausführungsbeispielen nach Fig. 1, 4 und 11 bis 13 sind die Wärmeleitwände 6 jeweils durch eine Wärmeleitplatte gebildet. Bei dem Ausführunsbeispiel nach Fig. 1 und 4 sind die Wärmeleitwände 6 in etwa parallel zueinander verlaufenden horizontalen Ebenen und bei den Ausführunsbeispielen nach Fig. 11 bis 13 in etwa parallel zueinander verlaufenden vertikalen Ebenen angeordnet. Die Wärmeleitwände 6 sind jeweils von mehreren Rohren 7 durchsetzt, die quer zu den Ebenen der Wärmeleitwände 6 und insbesondere rechtwinklig dazu verlaufen und an den Stellen, an denen sie durch die Wärmeleitwände 6 hindurchtreten, mit diesen wärmeleitend verbunden sind. Die Rohre 7 sind innenseitig von dem Sekundärmedium 4 durchströmt und stehen außenseitig mit dem Latentspeichermedium 3 in Kontakt.

Die Wärmeleitwände 6 sind einerseits mit Lochungen 8 und andererseits mit durch Zungen 9 gebildeten Vorsprüngen versehen, wobei die Lochungen 8 und die Zungen 9 jeweils wenigstens eine scharfe Kante und/oder Spitze aufweisen. Bei den Lochungen 8 sind die Kanten an dem die Lochungen 8 umgrenzenden Rand der Wärmeleitwand 6 angeordnet. Bei den Zungen 9 sind die Kanten am Umgrenzungsrand der Zungen 9 vorgesehen. Die Zungen 9 sind jeweils einstückig mit der ihnen zugeordneten Wärmeleitwand 6 verbunden und durch einen aus dem Querschnitt der dazu benachbarten Lochung 8 teilausgestanzten Wandungsbereich der Wärmeleitwand 6 gebildet. Die an den Lochungen 8 und den Zungen 9 angeordneten scharfen Kanten und/oder Spitzen bilden bevorzugte Ausgangspunkte für das Einsetzen des Kristallwachstums beim Erstarren des Latentspeichermediums. Das Erstarren des Latentspeichermediums wird somit gefördert, wodurch eine Unterkühlung des Latentspeichermediums 3 beim Entladen des Latentwärmespeichers 1 vermieden wird. Die Lochungen 8 ermöglichen darüber hinaus eine interne Zirkulation des Latentspeichermediums 3 zwischen den beidseits der jeweiligen Wärmeleitwand 6 befindlichen Teilvolumina des Innenraums des Speicherbehälters 2, wodurch eventuelle Diffusionsunterschiede in dem Latentspeichermedium 3 ausgeglichen werden. Außerdem verbessert die Zirkulation den Wärmeübergang zwischen dem Latentspeichermedium 3 und dem Wärmetauscher 5. Da die Zungen 9 ein Teil der Wärmeleitwände 6 bilden und einstückig mit diesen verbunden sind, ermöglichen sie aber auch eine Wärmeübertragung zwischen dem Latentspeichermedium 3 und dem Sekundärmedium 4.

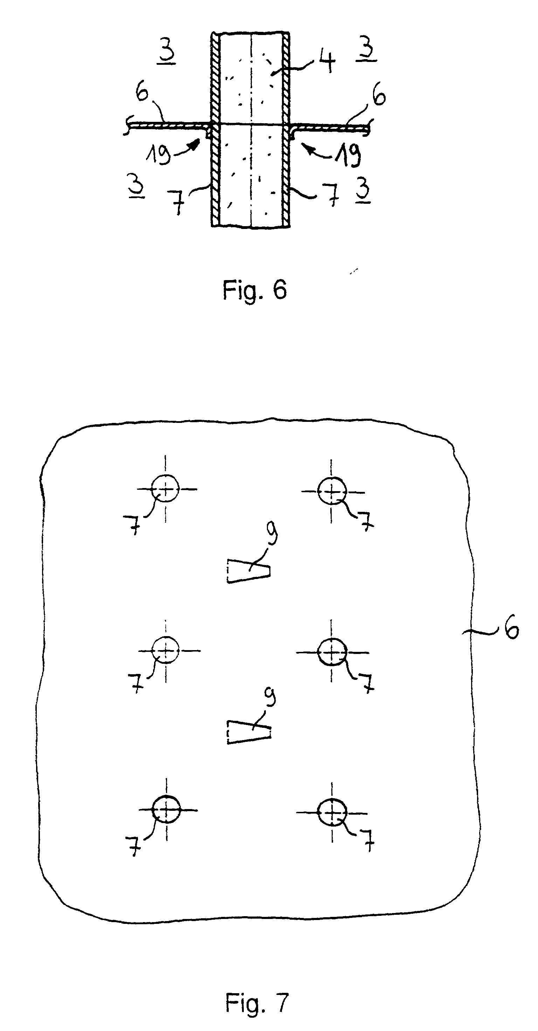

In Fig. 7 ist erkennbar, daß die Zungen 9 in ihrer Erstreckungsebene jeweils etwa die Form eines gleichschenkligen Trapezes aufweisen, wobei die kürzere der beiden etwa parallel zueinander angeordneten Seiten des Trapezes am freien Ende der Zunge 9 angeordnet ist. Der Querschnitt der Zungen 9 nimmt jeweils ausgehend von der mit der Wärmeleitwand 6 verbundenen Wurzel zum freien Ende der Zunge 9 hin ab. Auch die Lochungen 8 weisen in der Ebene der Wärmeleitwand 6 etwa die Form eines Trapezes auf. Dabei nimmt die lichte Weite zwischen den beiden schräg zueinander verlaufenden, einander gegenüberliegenden Seitenrändern der Lochungen 8 jeweils ausgehend von der Wurzel der zu der Lochung 8 benachbarten Zunge 9 zum gegenüberliegenden Ende der Lochung 8 hin ab, d.h. der zwischen diesen Seitenrändern gebildete Spalt verjüngt sich. Dadurch wird die Kristallbildung an den Lochungen 8 zusätzlich gefördert und somit eine unerwünschte Unterkühlung des Latentspeichermediums 3 verhindert.

Wie in Fig. 5 besonders gut erkennbar ist, sind die Zungen 9 jeweils mit ihren Erstreckungsebenen schräg zu den Ebenen der Wärmeleitwände 6 angeordnet und ragen mit ihren freien Enden jeweils in die zwischen zueinander benachbart übereinander oder nebeneinander angeordneten Wärmeleitwände 6 gebildeten Zwischenräume. Die Zungen 9 können dadurch während der Fertigung des Wärmetauschers 5 als Abstandshalter für die Wärmeleitwände 6 dienen. In Fig. 7 ist noch erkennbar, daß die Rohre 7 des Wärmetauschers 5 in den Ebenen der Wärmeleitwände 6 etwa an den Kreuzungsstellen der Spalten und Reihen einer gedachten Matrix angeordnet sind und daß die Lochungen 8 und die Zungen 9 jeweils etwa mittig zwischen vier direkt zueinander benachbarten Rohren 7 angeordnet sind.

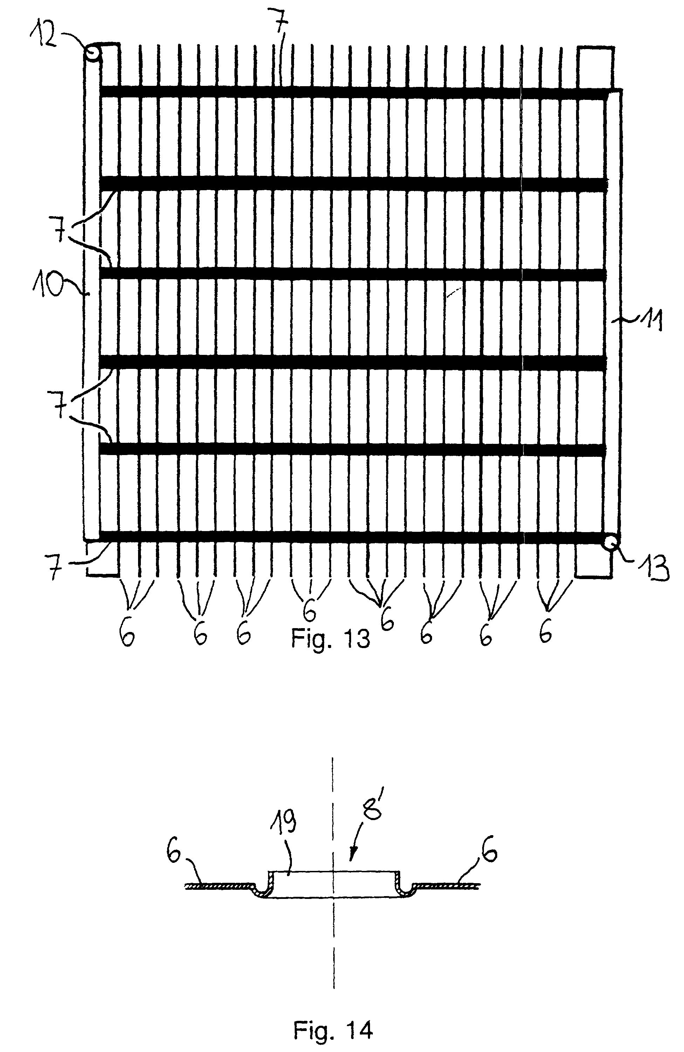

In Fig. 6 ist erkennbar, daß die Wärmeleitwände 6 an den Stellen, an denen die Rohre 7 durch die Wärmeleitwände 6 hindurchgeführt sind, jeweils einen Ringbund 19 aufweisen, der mit seiner Innenseite an dem ihm zugeordneten Rohr 7 anliegt. Dadurch wird zwischen den Rohren 8 und den Wärmeleitwänden 6 eine gute Wärmeleitfähigkeit erreicht. Die Wärmeleitwände 6 können an den Ringbunden 19 beispielsweise mit den Rohren 7 verlötet, verschweißt und/oder auf diese aufgeklemmt sein. Anstelle der Lochungen 8 und/oder der Zungen 9 oder zusätzlich dazu können auch an den Ringbunden 19 scharfe Kanten und/oder Spitzen vorgesehen sein, die beispielsweise durch einen Stanzgrat beim Ausstanzen der von den Ringbunden 19 umgrenzten Teilbereiche aus der Wärmeleitwand 6 an den freien Rändern der Ringbunde 19 gebildet werden können. Wie in Figur 14 erkennbar ist, können an den Ringbunden 19 oder benachbart dazu Stufen oder Absätze vorgesehen sein, die beim Stanzen der Ringbunde 19 in die Wärmeleitwände 6 eingeprägt werden können.

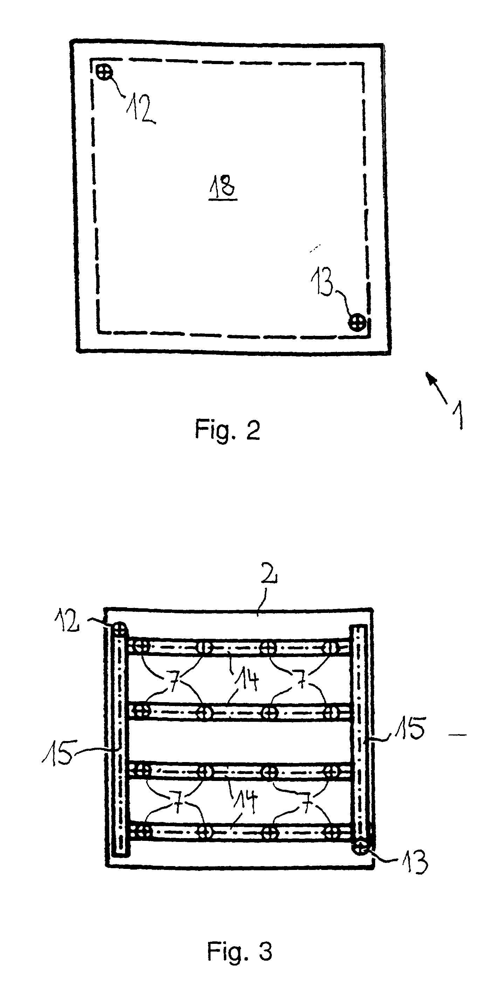

Bei dem Ausführungsbeispiel nach Fig. 4 sind die die Wärmeleitwände 6 durchsetzenden Rohre 7 zum richtungsgleichen Durchströmen mit dem Sekundärmedium 4 jeweils an ihren oberen Enden mit einem ersten Verteiler 10 und an ihren unteren Enden mit einem zweiten Verteiler 11 für das Sekundärmedium 4 verbunden sind und daß der Verteiler 10 an einem Zuleitungsanschluß 12 und der Verteiler 11 an einem Ableitungsanschluß 13 für das Sekundärmedium 4 angeschlossen ist. Die Zu- und Ableitungsanschlüsse 12, 13 sind jeweils an der Oberseite aus dem etwa quaderförmigen Speicherbehälter 2 herausgeführt (Fig. 1 und 2).

In Fig. 3 ist erkennbar, daß die Verteiler 10, 11 jeweils als Rohrverteiler mit mehreren parallel zueinander verlaufenden Verteilerrohren 14 ausgebildet sind, die jeweils an einer gemeinsamen, quer dazu verlaufenden Sammelleitung 15 angeschlossen sind. Die Rohre 7 sind jeweils so an die Verteilerrohre 14 angeschlossen, daß die von dem Zuleitungsanschluß 12 zu dem Ableitungsanschluß 13 jeweils über die einzelnen Rohre 7 führenden Wege etwa gleich lang sind, d.h. bei einem kurzen Vorlauf ist der Rücklauf lang und umgekehrt. Die parallel zueinander geschalteten Rohre 7 ermöglichen eine eindeutige Prozeßführung, derart, daß beim Aufladen beziehungsweise beim Aufheizen des Latentwärmespeichers 1 das Latentspeichermedium 3 von oben nach unten aufgeschmolzen und beim Entladen beziehungsweise Abkühlen die Erstarrung von unten nach oben erfolgt.

Auch bei dem Ausführungsbeispiel nach Fig. 11 bis 13 sind die Rohre 7 des Wärmetauschers 5 in den Ebenen der Wärmeleitwände 6 etwa an den Kreuzungsstellen der Spalten und Reihen einer gedachten Matrix angeordnet. Die Wärmeleitwände 6 sind durch Wärmeleitplatten gebildet, die in parallel zueinander verlaufenden Vertikalebenen angeordnet sind. Wie in Fig. 11 besonders gut erkennbar ist, sind die jeweils in einer (in vertikaler Richtung verlaufenden) Spalte dieser Matrix angeordneten Rohre 7 in Reihe geschaltet und zu einer schlangenlinienförmigen Rohranordnung miteinander verbunden. In einer Spalte der Matrix zueinander benachbart nebeneinander verlaufende Rohre 7 sind dazu jeweils an einem ihrer Enden durch Verbindungsrohre 20 miteinander verbunden. Dabei sind die an den einander abgewandten Enden der Rohre 7 angeordneten Verbindungsrohre 20 der einzelnen Rohre 7 jeweils in vertikaler Richtung versetzt zueinander angeordnet.

Durch die in Reihe geschalteten Rohre 7 und Verbindungsrohre 20 gebildeten schlangenlinienförmigen Rohranordnungen sind jeweils an ihren oberen Enden durch einen ersten Verteiler 10 und an ihren unteren Enden mit einem zweiten Verteiler 11 für das Sekundärmedium 4 verbunden. Der Verteiler 10 ist an einem Zuleitungsanschluß 12 und der Verteiler 11 an einem Ableitungsanschluß 13 für das Sekundärmedium 4 angeschlossen. Die Verbindungsrohre 20 werden somit in gleicher Richtung von dem Sekundärmedium 4 durchströmt, und zwar beim Aufladen beziehungsweise beim Aufheizen des Latentwärmespeichers 1 von oben nach unten und beim Entladen beziehungsweise Abkühlen die Erstarrung von unten nach oben.

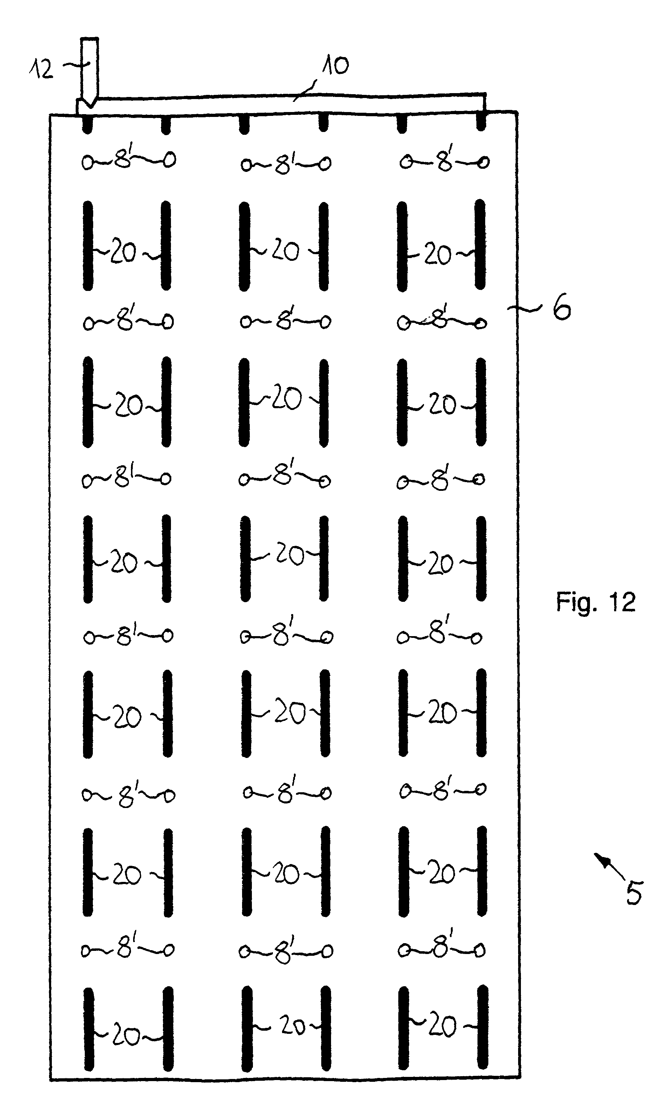

Die Wärmeleitwände 6 weisen Lochungen 8 auf, welche die Rohre 7 durchsetzen. Wie in Fig. 6 erkennbar ist, sind diese Lochungen 8 von einem durch einen Biege-Stanzvorgang gebildeten Ringbund 19 umgrenzt, der mit seiner Innenseite an dem ihm zugeordneten Rohr 7 anliegt. An seinem freien Rand weist der Ringbund eine scharfe Kante auf, die beim Erstarren des Latentspeichermediums einen Ausgangspunkte für das Einsetzen des Kristallwachstums bildet. In Fig. 12 und 14 ist erkennbar, daß nur einige der Ringbunde 19 von Rohren 7 durchsetzt sind, während die übrigen Ringbunde 19 Öffnungen 8' bilden, welche jeweils die beidseits einer Wärmeleitwand 6 befindlichen Plattenzwischenräume miteinander verbinden. Durch diese Öffnungen 8' hindurch kann das Latentspeichermedium 3 von dem jeweils an der einen Seite der Wärmeleitwand 6 befindlichen Plattenzwischenraum in den an der anderen Seite der Wärmeleitwand 6 befindlichen Plattenzwischenraum gelangen.

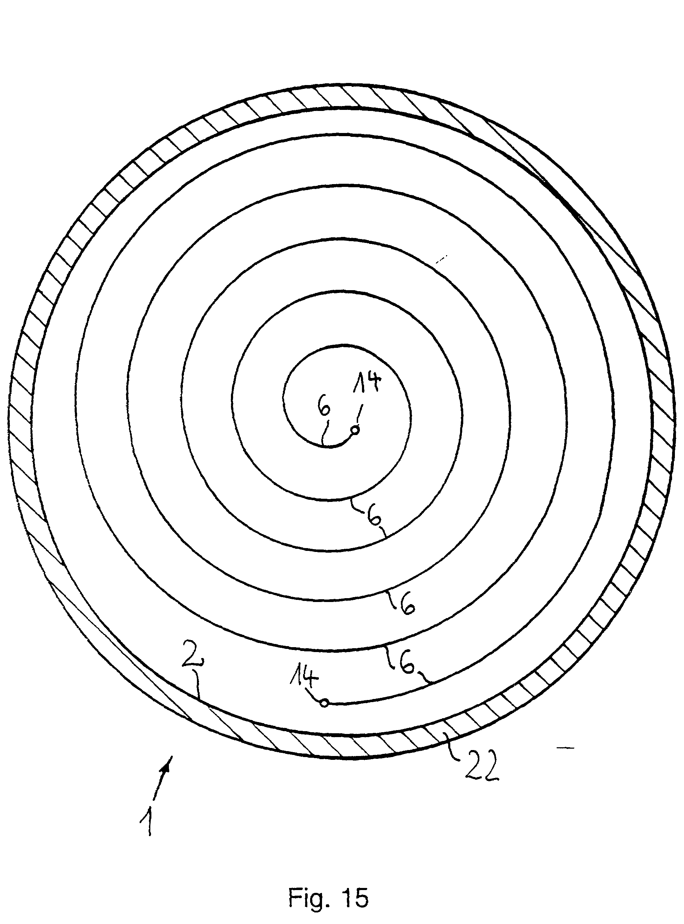

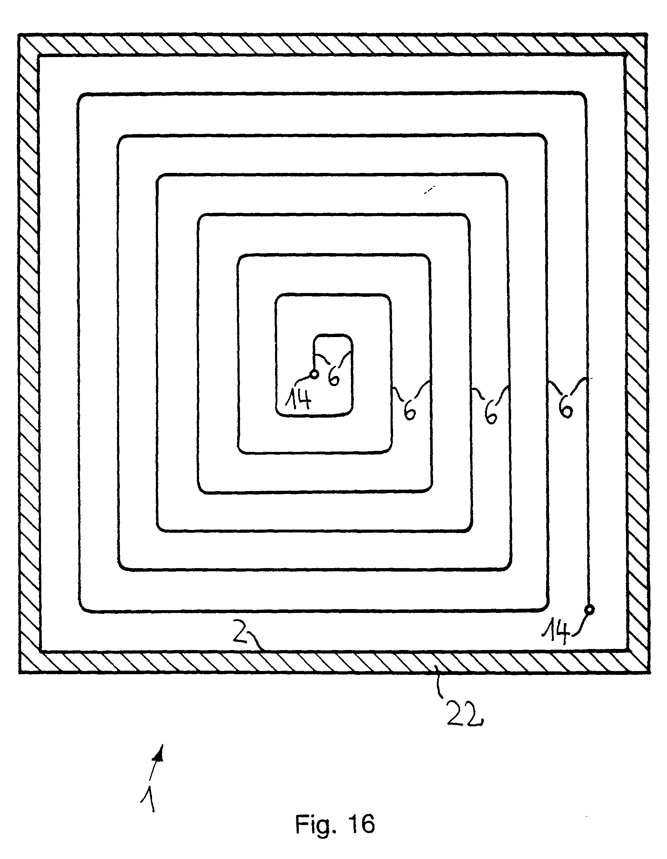

Bei den Ausführungsbeispielen nach Fig. 15 und 16 sind die Wärmeleitwände 6 durch Wandungsbereiche einer wickel- oder spiralförmig verlaufenden Wärmeleitplatte gebildet. Dabei weist der Speicherbehälter 2 bei dem Ausführungsbeispiel nach Fig. 15 einen etwa kreisrunden und bei dem Ausführungsbeispiel nach Fig. 16 einen quadratischen oder rechteckigen Querschnitt auf. Durch die wickel- oder spiralförmige Ausbildung der Wärmeleitwände 6 ergibt sich ein kompakter Aufbau. Der kreisrunde bzw. zylindrische Speicherbehälter 2 ist kostengünstig herstellbar.

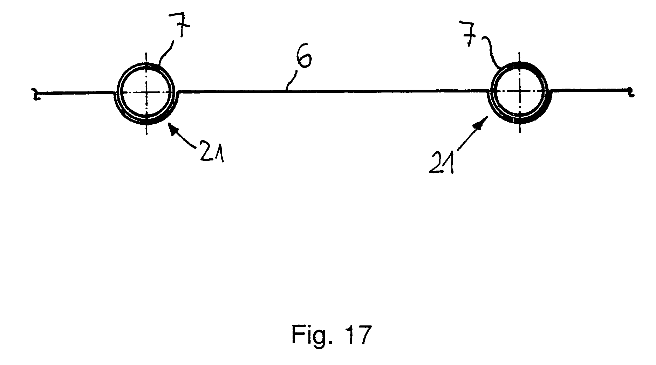

In Fig. 15 und 16 ist erkennbar, daß auch bei diesen Ausführungsbeispielen zueinander benachbarte Wärmeleitwände 6 jeweils durch zwischenräume voneinander beabstandet sind. Die Rohre 7 verlaufen auf den Wärmeleitwänden 6 in einer quer zur Achse deren Wicklung bzw. Spirale angeordneten Richtung und folgen der Krümmung der Wärmeleitwände 6. In Fig. 17 ist erkennbar, daß die Wärmeleitwände 6 rinnenartige Vertiefungen 21 aufweisen können, in welche die Rohre 7 eingelegt sind. Dabei sind diese Vertiefungen 21 in ihrer Form an die Außenkontur der Rohre 7 angepaßt, wodurch eine großflächige und somit gut wärmeleitende Verbindung zwischen den Rohren 7 und den Wärmeleitwänden 6 erreicht wird. Die Rohre 7 können beispielsweise einen Durchmesser 15 Millimetern und die Wärmeleitwände 6 eine Wandstärke von 0,3 Millimetern aufweisen.

An ihren einander abgewandten Enden sind die Rohre 7 jeweils mit einem Verteilerrohr 14 verbunden, das etwa parallel zur Achse der durch die Wärmeleitwände 6 gebildeten Wicklung bzw. Spirale verläuft. Wie in Fig. 15 und 16 erkennbar ist, ist eines dieser Verteilerrohre 14 am inneren Randbereich der Wicklung oder Spirale und das andere an deren äußerem Randbereich angeordnet. Bei den Ausführungsbeispielen nach Fig. 15 und 16 verläuft die Achse der durch die Wärmeleitwände 6 gebildeten Wicklung bzw. Spirale vorzugsweise in vertikaler Richtung, was bei der Montage des Latentwärmespeichers 1 ein einfaches Entlüften des Rohrleitungs systems ermöglicht. Erwähnt werden soll noch, daß der Speicherbehälter 2 außenseitig eine Wärmeisolationsschicht 22 aufweisen kann.

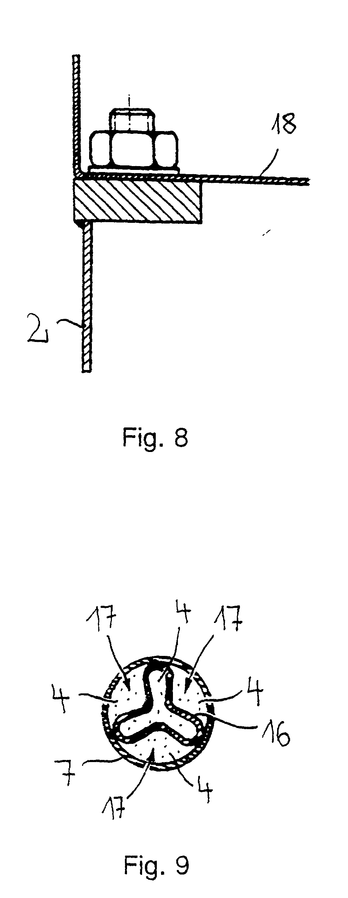

Zur Verbesserung des Wärmeüberganges an der Innenseite der Rohre 7 ist in die Innenhöhlung der Rohre 7 jeweils ein Verdrängungskörper 16 eingesetzt, dessen Außenkontur im Querschnitt etwa sternförmig ausgebildet ist und die Innenwand des Rohrs 7 an mehreren in Umfangsrichtung zueinander versetzen Stellen berührt. Zwischen der Außenwand des Verdrängungskörpers 16 und dem Rohr 7 sind mehrere in Umfangsrichtung zueinander versetzte Zwischenräume 17 gebildet, die Kanäle für den Durchtritt des Sekundärmediums 4 bilden. Durch den Verdrängungskörper 16 wird der freie Querschnitt des Rohres 7 reduziert, wodurch sich eine höhere Strömungsgeschwindigkeit und somit eine bessere thermische Kopplung zwischen dem Sekundärmedium 4 und dem mit dem Rohr 7 verbundenen Wärmeleitwand 6 ergibt. Durch die Erhöhung der Strömungsgeschwindigkeit ergibt sich außerdem ein höherer Druckverlust an den Rohren 7, der dazu führt, daß die Rohre 7 weitgehend unabhängig vom Druckverlust im Anschlußbereich gleichmäßig mit Druck beaufschlagt werden. In Fig. 9 ist noch erkennbar, daß der Verdrängungskörper 16 eine Innenhöhlung aufweist, die einen zusätzlichen Durchtrittskanal für das Sekundärmedium 4 bildet, der zu den Zwischenräumen 17 parallel geschaltet ist. Dadurch ergibt sich eine wesentlich größere mit dem Sekundärmedium 4 in Berührung stehende Oberfläche, wodurch die thermische Kopplung zwischen dem Sekundärmedium 4 und dem Rohr 7 zusätzlich erhöht wird. Das Rohr 7 und der Verdrängungskörper 16 bestehen vorzugsweise aus einem gut wärmeleitenden Material, beispielsweise aus Kupfer.

Der Verdrängungskörper 16 kann auch einen Vollquerschnitt aufweisen oder der Durchtrittskanal des Verdrängungskörpers 16 kann geschlossen und/oder gegen das Sekundärmedium 4 abgedichtet sein. Das Sekundärmedium 4 kann dann nur in den zwischen der Außenwand des Verdrängungskörpers 16 und dem Rohr 7 gebildeten Zwischenräumen 17 durch das Rohr 7 hindurchfließen, wodurch gegenüber dem Ausführungsbeispiel nach Fig. 9 eine noch größere Strömungsgeschwindigkeit erreicht wird. Gegenüber einem Rohr 7, in dessen Innenhöhlung kein Verdrängungskörper eingesetzt ist, ergibt sich außerdem eine größere, mit dem Sekundärmedium 4 in Berührung stehende Oberfläche.

In Fig.1 und 8 ist erkennbar, daß der Speicherbehälter 2 an seiner Oberseite eine Öffnung aufweist, die mit einer Abdeckung 18 verschlossen ist. Dadurch wird ein Verdunsten des Latentspeichermediums 3 verhindert. Die Abdeckung 18 ist lösbar mit dem Speicherbehälter 2 verbunden und kann bei Bedarf abgenommen werden, beispielsweise bei Wartungsarbeiten und/oder zum Befüllen des Speicherbehälters 2.

Der Latentwärmespeicher 1 weist also einen Speicherbehälter 2 auf, der mit einem Latentspeichermedium 3, insbesondere einem Salzhydrat, befüllt ist. Zum Erwärmen oder Abkühlen eines Sekundärmediums 4 ist mit dem Speichermedium 3 ein Wärmetauscher 5 thermisch leitend verbunden. Der Wärmetauscher 5 weist mehrere übereinander angeordnete und durch Zwischenräume voneinander beabstandete Wärmeleitplatten auf, die mit dem Sekundärmedium 4 in thermischem Kontakt stehen. An der mit dem Latentspeichermedium 3 in Kontakt befindlichen Außenseite des Wärmetauschers 5 und/oder an der mit dem Latentspeichermedium in Kontakt befindlichen Innenseite des Speicherbehälters 2 sind scharfe Kanten und/oder Spitzen angeordnet, welche die Kristallisation des Speichermediums 3 fördern und eine Unterkühlung des Speichermediums 3 vermeiden.

## Patentansprüche

1. Latentwärmespeicher (1) mit einem Speicherbehälter (2), der mit einem Latentspeichermedium (3), insbesondere einem Salzhydrat, befüllt ist, wobei in dem Latentspeichermedium (3) zum Erwärmen oder Abkühlen eines Sekundärmediums (4) ein Wärmetauscher (5) angeordnet ist, der mehrere durch Zwischenräume voneinander beabstandete Wärmeleitwände (6) aufweist, die mit dem Sekundärmedium (4) in thermischem Kontakt stehen, **dadurch gekennzeichnet, daß** an der mit dem Latentspeichermedium (3) in Kontakt befindlichen Außenseite des Wärmetauschers (5) und/oder an der mit dem Latentspeichermedium in Kontakt befindlichen Innenseite des Speicherbehälters (2) scharfe Kanten und/oder Spitzen vorgesehen sind und dass die scharfen Kanten und/oder Spitzen beim Abkühlen des Latentspeichermediums Ausgangspunkte für die Bildung von Kristallen in dem Latentspeichermedium bilden.

2. Latentwärmespeicher (1) nach Anspruch 1, **dadurch gekennzeichnet, daß** die Wärmeleitwände (6) mit Lochungen (8) versehen sind und daß die Kanten und/oder Spitzen an dem die Lochungen (8) umgrenzenden Randbereich der Wärmeleitwände (6) angeordnet sind.

3. Latentwärmespeicher (1) nach Anspruch 1 oder 2, **dadurch gekennzeichnet, daß** die Wärmeleitwände (6) durch Zungen (9) gebildete Vorsprünge aufweisen, die mit ihrer Erstreckungsrichtung vorzugsweise quer zur Ebene der Wärmeleitwände (6) angeordnet sind, und daß die Kanten und/oder Spitzen an den Zungen (9) angeordnet sind.

4. Latentwärmespeicher (1) nach einem der Ansprüche 1 bis 3, **dadurch gekennzeichnet, daß** wenigstens eine Zunge (9) einstückig mit der ihr zugeordneten Wärmeleitwand (6) verbunden und insbesondere durch einen aus dem Querschnitt einer Lochung (8) teilausgestanzten Wandungsbereich der Wärmeleitwand (6) gebildet ist.

5. Latentwärmespeicher (1) nach Anspruch 3 oder 4, **dadurch gekennzeichnet, daß** die Zungen (9) einer ersten Wärmeleitwand (6) einen Abstandshalter für eine dazu benachbarte zweite Wärmeleitwand (6) bilden und daß dazu der Abstand dieser Wärmeleitwände (6) so bemessen ist, daß die Zungen (9) der ersten Wärmeleitwand (6) mit ihren aus der Ebene dieser Wärmeleitwand (6) vorstehenden freien Endbereichen an der zweiten Wärmeleitwand (6) anliegen.

6. Latentwärmespeicher (1) nach einem der Ansprüche 2 bis 5, **dadurch gekennzeichnet, daß** die Lochungen (8) und/oder die Zungen (9) eine eckige Form aufweisen und insbesondere rechteckförmig, trapezförmig oder dreieckig ausgebildet sind.

7. Latentwärmespeicher (1) nach einem der Ansprüche 1 bis 6, **dadurch gekennzeichnet, daß** der Wärmetauscher (5) ein Rohrwärmetauscher mit einem das Sekundärmedium (4) führenden, mit den Wärmeleitwänden (6) thermisch leitend verbundenen Rohrleitungssystem ist.

8. Latentwärmespeicher (1) nach Anspruch 7, **dadurch gekennzeichnet, daß** das Rohrleitungssystem mehrere mit den Wärmeleitwänden (6) jeweils thermisch leitend verbundene Rohre (7) aufweist, die zum richtungsgleichen Durchströmen mit dem Sekundärmedium (4) an ihren oberen Enden mit einem ersten Verteiler (10) und an ihren unteren Enden mit einem zweiten Verteiler (11) für das Sekundärmedium (4) verbunden sind und daß die Verteiler (10, 11) jeweils an einem Zu- und/oder Ableitungsanschluß (12, 13) für das Sekundärmedium (4) angeschlossen sind.

9. Latentwärmespeicher (1) nach Anspruch 7 oder 8, **dadurch gekennzeichnet, daß** in die Innenhöhlungen der Rohre (7) Verdrängungskörper (16) eingesetzt sind und daß jeweils zwischen dem Verdrängungskörper (16) und dem Rohr (7) wenigstens ein Zwischenraum (17) für den Durchtritt des Sekundärmediums (4) vorgesehen ist.

10. Latentwärmespeicher (1) nach Anspruch 9, **dadurch gekennzeichnet, daß** der in das Rohr (7) eingesetzte Verdrängungskörper (16) eine Innenhöhlung mit einem Durchtrittskanal für das Sekundärmedium (4) aufweist und daß das Rohr (7) thermisch leitend mit dem Verdrängungskörper (16) verbunden ist.

11. Speicherbatterie bestehend aus mehreren Latentwärmespeichern (1) nach einem der Ansprüche 1 bis 10, **dadurch gekennzeichnet, daß** die Sekundärmediumzu- und -ableitungen der Wärmetauscher dieser Latentwärmespeicher (1) durch Verbindungsleitungen miteinander verbunden sind.

## Claims

1. Latent heat store (1), having a storage container (2), which is filled with a latent storage medium (3), more especially a salt hydrate, a heat exchanger (5) being disposed in the latent storage medium (3) for the heating or cooling of a secondary medium (4), said heat exchanger having a plurality of heat conduction walls (6) which are spaced from one another by intermediate chambers and are in thermal contact with the secondary medium (4), **characterised in that** sharp edges and/or points are provided on the external surface of the heat exchanger (5), which surface is in contact with the latent storage medium (3), and/or on the internal surface of said heat exchanger, which surface is in contact with the latent storage medium, and **in that** the sharp edges and/or points form starting points for the formation of crystals in the latent storage medium during the cooling of the latent storage medium.

2. Latent heat store (1) according to claim 1, **characterised in that** the heat conduction walls (6) are provided with perforations (8), and **in that** the edges and/or points are disposed on the edge region of the heat conduction walls (6), which region surrounds the perforations (8).

3. Latent heat store (1) according to claim 1 or 2, **characterised in that** the heat conduction walls (6) have projection members, which are formed by tongues (9) and are disposed with their direction of extension preferably at right angles to the plane of the heat conduction walls (6), and **in that** the edges and/or points are disposed on the tongues (9).

4. Latent heat store (1) according to one of claims 1 to 3, **characterised in that** at least one tongue (9) is integrally connected to the heat conduction wall (6) associated therewith and is formed, more especially, by a wall region of the heat conduction wall (6), which region is partially punched-out from the cross-section of a perforation (8).

5. Latent heat store (1) according to claim 3 or 4, **characterised in that** the tongues (9) of a first heat conduction wall (6) form a spacer member for a second heat conduction wall (6) adjacent thereto, and **in that** the spacing between these heat conduction walls (6) is so dimensioned, for such purpose, that the tongues (9) of the first heat conduction wall (6) abut against the second heat conduction wall (6) with their free end regions protruding from the plane of this heat conduction wall (6).

6. Latent heat store (1) according to one of claims 2 to 5, **characterised in that** the perforations (8) and/or the tongues (9) have an angular configuration and are, more especially, rectangular, trapezoidal or triangular.

7. Latent heat store (1) according one of claims 1 to 6, **characterised in that** the heat exchanger (5) is a tubular heat exchanger having a pipe system which guides the secondary medium (4) and is thermally conductively connected to the heat conduction walls (6).

8. Latent heat store (1) according to claim 7, **characterised in that** the pipe system has a plurality of pipes (7), which are each thermally conductively connected to the heat conduction walls (6) and, for the codirectional throughflow with the secondary medium (4), are connected at their upper ends to a first distributor (10) and at their lower ends to a second distributor (11) for the secondary medium (4), and **in that** the distributors (10, 11) each communicate with a supply and/or discharge connection (12, 13) for the secondary medium (4).

9. Latent heat store (1) according to claim 7 or 8, **characterised in that** displacement bodies (16) are inserted into the internal cavities of the pipes (7), and **in that** at least one intermediate chamber (17) is provided between the displacement body (16) and the pipe (7) for the passage of the secondary medium (4).

10. Latent heat store (1) according to claim 9, **characterised in that** the displacement body (16), inserted into the pipe (7), has an internal cavity with a through-channel for the secondary medium (4), and **in that** the pipe (7) is thermally conductively connected to the displacement body (16).

11. Storage battery, comprising a plurality of latent heat stores (1) according to one of claims 1 to 10, **characterised in that** the secondary medium supply and discharge lines of the heat exchangers of these latent heat stores (1) are interconnected by connecting lines.

## Revendications

1. Accumulateur thermique à chaleur latente (1) avec un récipient de stockage (2) qui est rempli d'un fluide de stockage latent (3), en particulier un hydrate salin, moyennant quoi un échangeur thermique (5), destiné au réchauffement ou au refroidissement d'un fluide secondaire (4), doté de parois conductrices de chaleur (6), séparées les unes des autres par des espaces intermédiaires, qui sont en contact thermique avec le fluide secondaire (4), est installé dans le fluide de stockage latent (3), **caractérisé en ce que** des arêtes acérées et/ou des pointes sont prévues sur la paroi extérieure de l'échangeur thermique (5) se trouvant en contact avec le fluide de stockage latent (3) et/ou sur la paroi interne du récipient de stockage (2) se trouvant en contact avec le fluide de stockage latent et **en ce que** les arêtes acérées et/ou les pointes constituent des points de départ pour la formation de cristaux dans le fluide de stockage latent lors du refroidissement du fluide de stockage latent.

2. Accumulateur thermique à chaleur latente (1) selon la revendication 1, **caractérisé en ce que** les parois conductrices de chaleur (6) sont pourvues de perforations (8) et **en ce que** les arêtes et/ou les pointes sont disposées dans la zone de bord entourant les perforations (8) des parois conductrices de chaleur (6).

3. Accumulateur thermique à chaleur latente (1) selon l'une des revendications 1 ou 2, **caractérisé en ce que** les parois conductrices de chaleur (6) sont pourvues de saillies formées par des languettes (9), disposées de préférence, en ce qui concerne leur sens d'orientation, transversalement au plan des parois conductrices de chaleur (6) et **en ce que** les arêtes et/ou les pointes sont disposées sur les languettes (9).

4. Accumulateur thermique à chaleur latente (1) selon l'une des revendications 1 à 3, **caractérisé en ce qu'**au moins une languette (9) est reliée d'un seul tenant à la paroi conductrice de chaleur (6) qui lui est attribuée et qu'elle est en particulier constituée d'une partie de paroi partiellement poinçonnée dans la section d'une perforation (8) de la paroi conductrice de chaleur (6).

5. Accumulateur thermique à chaleur latente (1) selon l'une des revendications 3 ou 4, **caractérisé en ce que** les languettes (9) d'une première paroi conductrice de chaleur (6) forment un écarteur pour une deuxième paroi conductrice de chaleur (6) contiguë et qu'en outre l'écartement entre ces parois conductrices de chaleur (6) est dimensionné de telle sorte que les languettes (9) de la première paroi conductrice de chaleur (6) s'appuient avec leurs extrémités libres saillant du plan de cette paroi conductrice de chaleur (6) sur la deuxième paroi conductrice de chaleur (6).

6. Accumulateur thermique à chaleur latente (1) selon l'une des revendications 2 à 5, **caractérisé en ce que** les perforations (8) et/ou les languettes (9) présentent une forme angulaire et revêtent en particulier une forme rectangulaire, trapézoïdale ou triangulaire.

7. Accumulateur thermique à chaleur latente (1) selon l'une des revendications 1 à 6, **caractérisé en ce que** l'échangeur thermique (5) est un échangeur thermique à tuyaux avec un système de tuyauterie, dans lequel circule le fluide secondaire (4) et qui est relié en conduction thermique aux parois conductrices de chaleur (6).

8. Accumulateur thermique à chaleur latente (1) selon la revendication 7, **caractérisé en ce que** le système de tuyauterie est doté de plusieurs tuyaux (7), chacun d'eux étant relié en conduction thermique aux parois conductrices de chaleur (6), lesquels sont reliés, afin d'assurer un même sens de flux pour le fluide secondaire (4), sur leurs extrémités supérieures à un premier répartiteur (10) et sur leurs extrémités inférieures à un second répartiteur (11) pour le fluide secondaire (4) et **en ce que** les répartiteurs (10, 11) sont chacun connectés à un branchement d'alimentation et/ou d'évacuation (12, 13) pour le fluide secondaire.

9. Accumulateur thermique à chaleur latente (1) selon l'une des revendications 7 ou 8, **caractérisé en ce que** des corps de déplacement (16) sont placés dans les cavités intérieures des tuyaux (7) et **en ce qu'**entre chacun des corps de déplacement (16) et le tuyau (7) au moins un espace intermédiaire (17) est prévu pour le passage du fluide secondaire (4).

10. Accumulateur thermique à chaleur latente (1) selon la revendication 9, **caractérisé en ce que** le corps de déplacement (16) placé dans le tuyau (7) est pourvu d'une cavité intérieure avec une canalisation de passage pour le fluide secondaire (4) et **en ce que** le tuyau (7) est relié en conduction thermique avec le corps de déplacement (16).

11. Batterie d'accumulation constituée de plusieurs accumulateurs thermiques à chaleur latente (1) selon l'une des revendications 1 à 10, **caractérisée en ce que** les conduites d'alimentation et d'évacuation du fluide secondaire des échangeurs thermiques de ces accumulateurs thermiques à chaleur latente (1) sont reliées entre elles par des conduites de raccordement.
